(19) Europäisches Patentamt / European Patent Office / Office européen des brevets

(11) **EP 4 276 950 A1**

(12) **EUROPEAN PATENT APPLICATION**
published in accordance with Art. 153(4) EPC

(43) Date of publication:
**15.11.2023 Bulletin 2023/46**

(21) Application number: **21917837.3**

(22) Date of filing: **12.07.2021**

(51) International Patent Classification (IPC):
**H01M 4/525** (2010.01) **H01M 4/505** (2010.01)
**C01G 53/00** (2006.01) **H01M 10/052** (2010.01)

(52) Cooperative Patent Classification (CPC):
**C01G 53/00; H01M 4/505; H01M 4/525;**
**H01M 10/052; Y02E 60/10**

(86) International application number:
**PCT/KR2021/008865**

(87) International publication number:
**WO 2022/149675 (14.07.2022 Gazette 2022/28)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **05.01.2021 KR 20210000958**

(71) Applicant: **Samsung SDI Co., Ltd.**
**Yongin-si, Gyeonggi-do 17084 (KR)**

(72) Inventors:
• **AHN, Kiyong**
**Yongin-si, Gyeonggi-do 17084 (KR)**

• **JUN, Dowook**
**Yongin-si, Gyeonggi-do 17084 (KR)**
• **KONG, Youngsun**
**Yongin-si, Gyeonggi-do 17084 (KR)**
• **KWON, Seonyoung**
**Yongin-si, Gyeonggi-do 17084 (KR)**
• **KIM, Min Ju**
**Yongin-si, Gyeonggi-do 17084 (KR)**
• **LEE, Dookyun**
**Yongin-si, Gyeonggi-do 17084 (KR)**
• **HONG, Kijoo**
**Yongin-si, Gyeonggi-do 17084 (KR)**

(74) Representative: **Marks & Clerk LLP**
**15 Fetter Lane**
**London EC4A 1BW (GB)**

(54) **POSITIVE ELECTRODE ACTIVE MATERIAL PRECURSOR FOR LITHIUM SECONDARY BATTERY AND METHOD FOR MANUFACTURING SAME**

(57) Provided is a positive electrode active material precursor for a rechargeable lithium battery including a nickel-based composite metal hydroxide including a secondary particle in which a plurality of primary particles are agglomerated, wherein the secondary particle includes a central portion and a surface portion, and the surface portion includes a primary particle coated with manganese oxide, manganese hydroxide, or a mixture thereof.

FIG. 1

EP 4 276 950 A1

**Description**

**[Technical Field]**

A positive electrode active material precursor for a rechargeable lithium battery and a method of preparing the same are disclosed.

**[Background Art]**

In order to meet down-sizing and high performance of various devices, rechargeable lithium batteries have become increasingly important in terms of high energy density as well as down-sizing and weight reduction. In addition, high capacity and high-temperature stability of rechargeable lithium batteries, and safety at a high voltage become important to apply to electric vehicles and the like.

Various positive electrode active materials have been investigated to realize rechargeable lithium batteries for applications to the uses.

Nickel-based lithium transition metal oxide simultaneously including Ni, Co, Mn, and the like provides high discharge capacity per unit weight, compared with conventional $LiCoO_2$, but has relatively low capacity and discharge capacity per unit volume due to low packing density. In addition, safety of the nickel-based lithium transition metal oxide may be deteriorated, when driven at a high voltage.

Accordingly, a method for improving structural stability and cycle-life of the nickel-based lithium transition metal oxide is required.

**[Disclosure]**

An embodiment provides a positive electrode active material precursor having improved structural stability and effective for improving cycle-life of a rechargeable lithium battery.

Another embodiment provides a method of preparing the positive electrode active material precursor.

An embodiment provides a positive electrode active material precursor for a rechargeable lithium battery including a nickel-based composite metal hydroxide including a secondary particle in which a plurality of primary particles are agglomerated, the secondary particle includes a central portion and a surface portion, and the surface portion includes a primary particle coated with manganese oxide, manganese hydroxide, or a mixture thereof.

The manganese hydroxide may be $Mn(OH)_2$.

The manganese oxide may be at least one selected from $MnO_2$, $Mn_2O_3$, and $Mn_3O_4$.

A content of manganese may be 0.1 mol% to 5 mol% based on the total amount (mol%) of the positive electrode active material precursor.

The positive electrode active material precursor may have a concentration gradient in which the concentration of manganese gradually decreases from the outermost surface toward the center of the surface portion of the secondary particle.

The surface portion of the secondary particle may be within 50 length% of the total distance from the center to the outermost surface of the secondary particle in the direction from the outermost surface to the center.

The nickel-based composite metal hydroxide may be represented by Chemical Formula 1:

$$[\text{Chemical Formula 1}] \qquad Ni_{1-x-y-z}Co_xMn_yM_z(OH)_2$$

In Chemical Formula 1,
$0 < x \leq 0.05$, $0.001 \leq y \leq 0.05$, and $0 \leq z \leq 0.02$, and M is at least one metal element selected from Ni, Mn, Al, Cr, Fe, V, Mg, Ti, Zr, Nb, Mo, W, Cu, Zn, Ga, In, Sn, La, B, Ta, Pr, Si, Ba, and Ce.

The positive electrode active material precursor may have a shape selected from a particle, a fiber, and a combination thereof.

The positive electrode active material precursor may have a layered structure.

Another embodiment provides a method of preparing a positive electrode active material precursor that includes preparing a dispersion in which a nickel-based composite metal hydroxide including secondary particles in which a plurality of primary particles are agglomerated is dispersed in a solvent (wherein the secondary particles have a central portion and a surface portion); adding an aqueous solution of manganese salt and a precipitant to the dispersion in an atmosphere having a reduced oxygen content to prepare a nickel-based composite metal hydroxide coated with a manganese salt (wherein the manganese salt is coated on the primary particles of the surface portion); and drying the nickel-based composite metal hydroxide coated with the manganese salt.

The atmosphere having the reduced oxygen content may be obtained by injecting an inert gas.

A process of heat-treating the dried product produced after drying the nickel-based composite metal hydroxide coated with the manganese salt at 400 to 500 °C may be further included. Through the process of heat-treating, all manganese compounds may be changed to $MnO_2$.

Other specific details of embodiments are included in the detailed description below.

By preparing a positive electrode active material through a positive electrode active material precursor having a concentration gradient of manganese in the surface portion of the secondary particle, it is possible to maximize capacity, improve cycle-life, and increase initial charge/discharge efficiency at the same time.

**[Description of the Drawings]**

FIG. 1 is a schematic cross-sectional view showing a positive electrode active material precursor having a grain boundary coated with primary particles according to an embodiment.

FIG. 2 is a SEM (Scanning Electron Microscope) photograph of a spherical positive electrode active material precursor.

FIG. 3 is a SEM photograph of a fiber-shaped positive electrode active material precursor.

FIG. 4 is a SEM photograph of a precursor of a positive electrode active material in which a spherical shape and a fiber shape are mixed.

FIG. 5 is a SEM photograph of the surface portion of secondary particles of the positive electrode active material precursor of the example.

FIG. 6 shows the distribution of manganese in the positive electrode active material precursor of the example.

**[Mode for Invention]**

Hereinafter, embodiments of the present invention are described in detail. However, these are presented as examples, and thus the present invention is not limited and the present invention is only defined by the scope of the claims to be described later.

As used herein, when specific definition is not otherwise provided, It will be understood that when an element such as a layer, film, region, or substrate is referred to as being "on" another element, it can be directly on the other element or intervening elements may also be present.

In the present invention, the "particle size" or "particle diameter" may be defined as the average particle diameter (D50) based on 50% of the volume cumulative amount in the particle size-distribution curve. The particle diameter may be, for example, measured by an electron microscopy examination using a scanning electron microscopy (SEM) or a field emission scanning electron microscopy (FE-SEM), or a laser diffraction method. It may be measured by the laser diffraction method as follows. The particles to be measured are dispersed in a dispersion medium and then introduced into a commercially available laser diffraction particle size measuring apparatus (for example, MT 3000 of Microtrac), ultrasonic waves of about 28 kHz are irradiated with an output of 60 W, and an average particle diameter (D50) in 50% reference of the particle size distribution in a measuring apparatus may be calculated.

In the present specification, the "center" means a point that bisects the longest axis of a particle.

The "primary particle" may be a crystalline particle or a grain. A plurality of the primary particles forms grain boundaries and is agglomerated together to form a secondary particle, wherein the primary particles may have various shapes such as a spherical shape or a similar spherical shape (a flake shape and the like).

The "secondary particle" refers to a particle that comprises the plurality of the primary particles but is not an agglomerate of other particles or a particle that is no longer agglomerated and may have a spherical shape or a pseudo spherical shape.

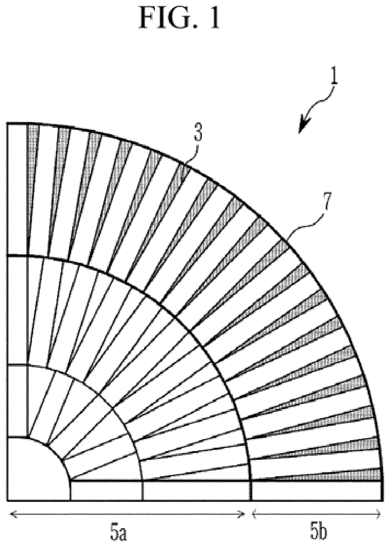

Hereinafter, a positive electrode active material precursor for a rechargeable lithium battery is described with reference to FIG. 1. FIG. 1 is a schematic cross-sectional view showing a positive electrode active material precursor in which grain boundaries of primary particles in the surface portion of secondary particle are coated with a manganese compound according to an embodiment.

Referring to FIG. 1, a positive electrode active material precursor according to an embodiment includes a nickel-based composite metal hydroxide including secondary particles 1 in which a plurality of primary particles 3 are agglomerated.

The secondary particle 1 includes a central portion 5a and a surface portion 5b, and the surface portion 5b includes a manganese compound in the grain boundary 7 of the plurality of primary particles 3. That is, the positive electrode active material precursor may include a nickel-based composite metal hydroxide in which a manganese compound is coated in the grain boundary of primary particles of the surface portion 5b corresponding to a predetermined depth.

The manganese compound is any one selected from manganese hydroxide, manganese oxide, and a combination thereof.

The manganese hydroxide may be $Mn(OH)_2$, and the manganese oxide may be at least one selected from $MnO_2$, $Mn_2O_3$, and $Mn_3O_4$. The $Mn_3O_4$ may be a spinel structure.

The central portion 5a may refer to a region of less than or equal to 50 length% to less than or equal to 80 length% from the center, for example of less than or equal to 75 length% from the center, less than or equal to 70 length%, less than or equal to 65 length%, less than or equal to 60 length%, less than or equal to 55 length%, or less than or equal to 50 length% with respect to a total distance (100 length%) from the center to the outermost surface of the secondary particle 1 or a region excluding the region within 2 μm from the outermost surface of the secondary particle 1.

The surface portion 5b is a portion excluding the central portion 5a, and a region of less than or equal to 20 length% from the outermost surface to less than or equal to 50 length%, for example less than or equal to 25 length%, less than or equal to 30 length%, less than or equal to 20 length%, less than or equal to 40 length%, less than or equal to 45 length%, or less than or equal to 50 length% from the outermost surface with respect to the total distance (100 length%) from the center to the outermost surface.

In an embodiment, a region from the surface portion 5b of the secondary particle to the central portion 5a of the secondary particle may be a region of less than or equal to 1000 nm, for example less than or equal to 400 nm, less than or equal to 450 nm, less than or equal to 500 nm, less than or equal to 550 nm, less than or equal to 600 nm, less than or equal to 650 nm, less than or equal to 700 nm, less than or equal to 750 nm, less than or equal to 800 nm, less than or equal to 850 nm, less than or equal to 900 nm, or less than or equal to 950 nm.

The surface portion 5b is a partial region of the secondary particle 1 in which the primary particles 3 are coated on the grain boundaries. Herein, 2 to 3 primary particles may be included based on the cross-section of the surface portion 5b of the secondary particles 1.

The size of the primary particles 3 may be 100 nm to 800 nm. For example, the size of the primary particle 3 may be greater than or equal to 50 nm, greater than or equal to 100 nm, greater than or equal to 150 nm, greater than or equal to 200 nm, greater than or equal to 250 nm, greater than or equal to 300 nm, greater than or equal to 350 nm, greater than or equal to 400 nm, greater than or equal to 450 nm, greater than or equal to 500 nm, greater than or equal to 550 nm, greater than or equal to 600 nm, greater than or equal to 650 nm, greater than or equal to 700 nm, or greater than or equal to 750 nm and may be less than or equal to 800 nm, less than or equal to 750 nm, less than or equal to 700 nm, less than or equal to 650 nm, less than or equal to 600 nm, less than or equal to 550 nm, less than or equal to 500 nm, less than or equal to 450 nm, less than or equal to 400 nm, less than or equal to 350 nm, less than or equal to 300 nm, less than or equal to 250 nm, less than or equal to 200 nm, or less than or equal to 150 nm.

The surface portion 5b includes primary particles 3 coated with a manganese compound between the primary particles 3 (i.e., grain boundaries), and an amount of manganese present in the grain boundaries 7 of the plurality of primary particles 3 present in the surface portion 5b is higher than an amount of manganese present inside the primary particle 3. That is, the amount of manganese coated on the grain boundaries of the primary particles 3 is higher than the amount coated on the inside of the primary particles 3.

The "grain boundary" means an interface of two adjacent primary particles 3. In an embodiment, the grain boundary may mean a region of less than or equal to 20 length% from the outermost surface based on the total distance from a center of the primary particle 3 to the outermost surface (the interface between the adjacent primary particles 3) to a region of less than or equal to 40 length% from the outermost surface, for example, a region of less than or equal to 25 length%, a region of less than or equal to 30 length%, or a region of less than or equal to 35 length% from the outermost surface. The inside of the primary particle 3 means a portion excluding the grain boundary. In an embodiment, the inside of the primary particle 3 may mean a region of less than or equal to 60 length% from the center of the primary particle 3 to less than or equal to 80 length% from the center of the primary particle 3, based on the total distance from the center of the primary particle to the outermost surface (the interface between adjacent primary particles 3), for example, less than or equal to 40 length%, less than or equal to 45 length%, less than or equal to 50 length%, less than or equal to 55 length%, less than or equal to 60 length%, less than or equal to 65 length%, less than or equal to 70 length%, less than or equal to 75 length%, or less than or equal to 80 length% from the center of the primary particle.

The nickel-based composite metal hydroxide may include 0.1 mol% to 5 mol% of manganese, based on the total amount (mol%) of the metal of the nickel-based composite metal hydroxide. The concentration of manganese in the surface portion 5b of the secondary particle 1 may be as high as the content of manganese in the nickel-based composite metal hydroxide compared to the concentration of manganese in the central portion 5a. That is, the concentration of manganese in the surface portion 5b of the secondary particle 1 may further include 0.1 mol% to 5 mol% of manganese relative to the concentration of manganese present in the central portion 5a. By including 0.1 mol% to 5 mol% of manganese based on the total amount (mol%) of the metal in the nickel-based composite metal hydroxide, structural stability and cycle characteristics of the positive electrode active material may be improved.

The content of manganese relative to the total amount (mol%) of the metal of the nickel-based composite metal hydroxide may be greater than or equal to 0.1 mol%, greater than or equal to 0.2 mol%, greater than or equal to 0.3 mol%, greater than or equal to 0.4 mol%, greater than or equal to 0.5 mol%, greater than or equal to 0.6 mol%, greater than or equal to 0.7 mol%, greater than or equal to 0.8 mol%, greater than or equal to 0.9 mol%, greater than or equal to 1.0 mol%, greater than or equal to 1.1 mol%, greater than or equal to 1.2 mol%, greater than or equal to 1.3 mol%, greater than or equal to 1.4 mol%, greater than or equal to 1.5 mol%, greater than or equal to 1.6 mol%, greater than or equal to 1.7 mol%, greater than or equal to 1.8 mol%, greater than or equal to 1.9 mol%, greater than or equal to 2.0 mol%, greater than or equal to 2.1 mol%, greater than or equal to 2.2 mol%, greater than or equal to 2.3 mol%, greater than or equal to 2.4 mol%, greater than or equal to 2.5 mol%, greater than or equal to 2.6 mol%, greater than or equal to 2.7 mol%, greater than or equal to 2.8 mol%, greater than or equal to 2.9 mol%, greater than or equal to 3.0 mol%, greater than or equal to 3.1 mol%, greater than or equal to 3.2 mol%, greater than or equal to 3.3 mol%, greater than or equal to 3.4 mol%, greater than or equal to 3.5 mol%, greater than or equal to 3.6 mol%, greater than or equal to 3.7 mol%, greater than or equal to 3.8 mol%, greater than or equal to 3.9 mol%, greater than or equal to 4.0 mol%, greater than or equal to 4.1 mol%, greater than or equal to 4.2 mol%, greater than or equal to 4.3 mol%, greater than or equal to 4.4 mol%, greater than or equal to 4.5 mol%, greater than or equal to 4.6 mol%, greater than or equal to 4.7 mol%, greater than or equal to 4.8 mol%, greater than or equal to 4.9 mol%, or greater than or equal to 5.0 mol%.

In an embodiment, the content of manganese relative to the total amount (mol%) of the metal of the nickel-based composite metal hydroxide may be less than or equal to 5.0 mol%, less than or equal to 4.9 mol%, less than or equal to 4.8 mol%, less than or equal to 4.7 mol%, less than or equal to 4.6 mol%, less than or equal to 4.5 mol%, less than or equal to 4.4 mol%, less than or equal to 4.3 mol%, less than or equal to 4.2 mol%, less than or equal to 4.1 mol%, less than or equal to 4.0 mol%, less than or equal to 3.9 mol%, less than or equal to 3.8 mol%, less than or equal to 3.7 mol%, less than or equal to 3.6 mol%, less than or equal to 3.5 mol%, less than or equal to 3.4 mol%, less than or equal to 3.3 mol%, less than or equal to 3.2 mol%, less than or equal to 3.1 mol%, less than or equal to 3.0 mol%, less than or equal to 2.9 mol%, less than or equal to 2.8 mol%, less than or equal to 2.7 mol%, less than or equal to 2.6 mol%, less than or equal to 2.5 mol%, less than or equal to 2.4 mol%, less than or equal to 2.3 mol%, less than or equal to 2.2 mol%, less than or equal to 2.1 mol%, less than or equal to 2.0 mol%, less than or equal to 1.9 mol%, less than or equal to 1.8 mol%, less than or equal to 1.7 mol%, less than or equal to 1.6 mol%, less than or equal to 1.5 mol%, less than or equal to 1.4 mol%, less than or equal to 1.3 mol%, less than or equal to 1.2 mol%, less than or equal to 1.1 mol%, less than or equal to 1.0 mol%, less than or equal to 0.9 mol%, less than or equal to 0.8 mol%, less than or equal to 0.7 mol%, less than or equal to 0.6 mol%, less than or equal to 0.5 mol%, less than or equal to 0.4 mol%, less than or equal to 0.3 mol%, less than or equal to 0.2 mol%, or less than or equal to 0.1 mol%.

The positive electrode active material precursor may have a concentration gradient in which the concentration of manganese continuously decreases from the surface portion 5b to the central portion 5a of the secondary particle 1. The surface portion 5b of the secondary particle 1 may include a first surface portion close to the outermost surface and a second surface portion close to the center, and the first surface portion may have a higher concentration of manganese than the second surface portion.

The nickel-based composite metal hydroxide may be represented by Chemical Formula 1:

$$[\text{Chemical Formula 1}] \qquad Ni_{1-x-y-z}Co_xMn_yM_z(OH)_2$$

In Chemical Formula 1,

$0 \leq x \leq 0.05$, $0.001 \leq y \leq 0.05$, and $0 \leq z \leq 0.02$, and M is at least one metal element selected from Ni, Mn, Al, Cr, Fe, V, Mg, Ti, Zr, Nb, Mo, W, Cu, Zn, Ga, In, Sn, La, B, Ta, Pr, Si, Ba, and Ce.

In an embodiment, the compound of Chemical Formula 1 may be $Ni_{1-x-y}Co_xMn_y(OH)_2$, $Ni_{1-x-y-z}Co_xMn_yAl_z(OH)_2$, $Ni_{1-x-y-z}Co_xMn_{y+z}(OH)_2$ (wherein, the range of x, y, and z is same as in Chemical Formula 1).

Since the nickel-based composite metal hydroxide includes a high amount of nickel, the capacity can be maximized. When nickel is contained in a high content, there may be a problem that the capacity is high but the cycle-life is low, but the deterioration in the cycle-life may be solved by doping a certain amount of manganese.

In an embodiment, y in Chemical Formula 1 may be $0.001 \leq y \leq 0.05$.

When y in Chemical Formula 1 exceeds 0.05, manganese may be agglomerated with each other.

Specific examples of the $Ni_{1-x-y-z}Co_xMn_yAl_z(OH)_2$ may be $(NiCoAl)_{0.995}Mn_{0.005}(OH)_2$, $(NiCoAl)_{0.99}Mn_{0.01}(OH)_2$, $(NiCoAl)_{0.985}Mn_{0.015}(OH)_2$, $(NiCoAl)_{0.98}Mn_{0.02}(OH)_2$, $(NiCoAl)_{0.975}Mn_{0.025}(OH)_2$, $(NiCoAl)_{0.97}Mn_{0.03}(OH)_2$, and the like.

In an embodiment, the nickel-based composite metal hydroxide may be a layered oxide.

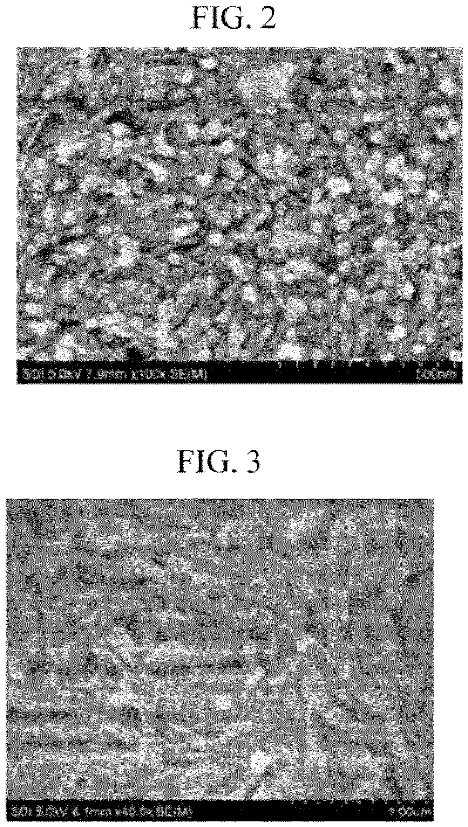

In an embodiment, the nickel-based composite metal hydroxide may have a spherical shape. In the present specification, 'spherical shape' refers to a shape when manganese is coated on circular particles of a positive electrode active material precursor. A SEM image of the spherical positive electrode active material precursor is shown in FIG. 2. Referring to FIG. 2, it can be confirmed that manganese is coated on the circular particles and the nickel-based composite metal hydroxide exists in a spherical shape.

In another embodiment, the nickel-based composite metal hydroxide may have a fiber shape. In the present specification, 'fiber shape' means non-circular particles, for example, oval or rectangular-shaped particles. A SEM image of the fiber-shaped cathode active material precursor is shown in FIG. 3. Referring to FIG. 3, it can be confirmed that the nickel-based composite metal hydroxide exists in the form of a fiber.

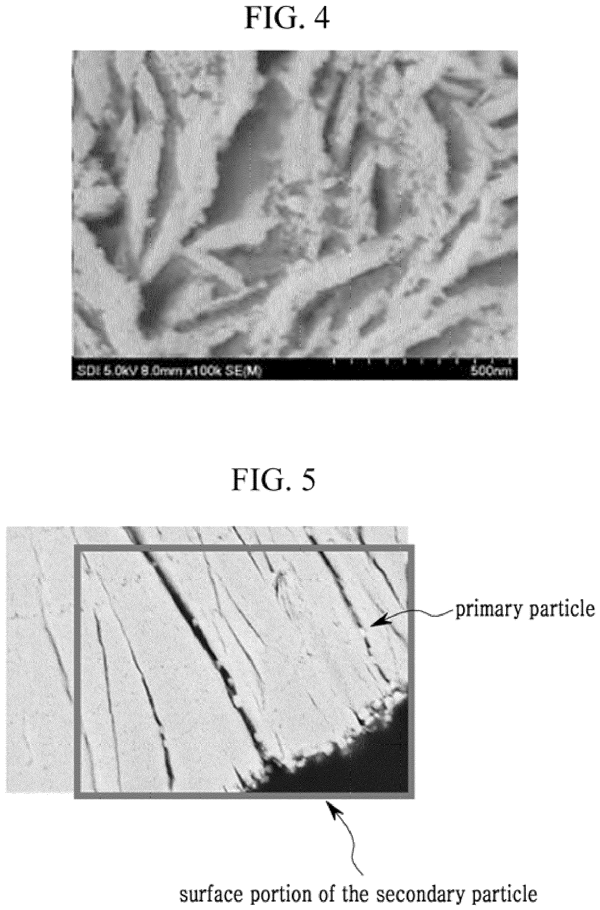

For example, the nickel-based composite metal hydroxide may have a shape selected from nanoparticles, nanofibers, and a combination thereof. FIG. 4 shows a SEM image of the positive electrode active material precursor in which a spherical shape and a fiber shape are mixed.

Most of the nickel-based composite metal hydroxide has a spherical shape, and some fiber-shaped nickel-based composite metal hydroxides may be mixed.

The manganese content ratio (molar ratio) of the surface portion 5b to the central portion 5a of the secondary particle 1 may be 5 to 15. For example, the manganese content ratio of the surface portion 5b to the central portion 5a of the secondary particle 1 may be greater than or equal to 5, greater than or equal to 6, greater than or equal to 7, greater than or equal to 8, greater than or equal to 9, greater than or equal to 10, greater than or equal to 11, greater than or equal to 12, greater than or equal to 13, or greater than or equal to 14, and less than or equal to 15, less than or equal to 14, less than or equal to 13, less than or equal to 12, less than or equal to 11, less than or equal to 10, less than or equal to 9, less than or equal to 8, less than or equal to 7, or less than or equal to 6. In an embodiment, the manganese content ratio of the surface portion 5b to the central portion 5a of the secondary particle 1 may be 10.

In an embodiment, manganese may not be included in the central portion 5a of the secondary particle.

As described above, the positive electrode active material precursor according to an embodiment includes a manganese compound in the grain boundary between the primary particles from the outermost surface of the secondary particle 1 to a certain depth, that is, in the surface portion 5b. This is different from the conventional configuration of coating the surface of the secondary particle, and the structural stability of the positive electrode active material may be improved by coating the primary particle at a certain depth on the outermost surface.

The positive electrode active material precursor is prepared according to the following preparing method. The positive electrode active material precursor is prepared through a co-precipitation method.

First, a nickel-based composite metal hydroxide including secondary particles in which a plurality of primary particles are agglomerated and a solvent are put into a reactor and dispersed to prepare a dispersion.

The solvent may be distilled water.

The nickel composite metal hydroxide and the solvent are put into a reactor and stirred to prepare a dispersion and during stirring, an inert gas may be injected into the reactor. By injecting an inert gas into the reactor, the partial pressure of dissolved oxygen may be lowered. When dissolved oxygen is high, manganese exists as an oxide rather than a hydroxide, making it difficult to coat the surface of the nickel composite metal hydroxide. Therefore, in order to prevent this, the reaction between the nickel composite metal hydroxide and dissolved oxygen may be minimized by injecting an inert gas into the reactor to lower the partial pressure of dissolved oxygen.

The inert gas may be selected from $N_2$, He, Ar, and a combination thereof.

An injection rate of the inert gas may be 50 sccm to 5000 sccm. The injection rate of the inert gas may be, for example, greater than or equal to 500 sccm, greater than or equal to 1000 sccm, greater than or equal to 1500 sccm, greater than or equal to 2000 sccm, greater than or equal to 2500 sccm, greater than or equal to 3000 sccm, greater than or equal to 3500 sccm, greater than or equal to 4000 sccm, or greater than or equal to 4500 sccm.

The temperature of the reactor during stirring may be between 30 °C and 60 °C, for example between 40 °C and 50 °C, or 45 °C.

The stirring speed of the reactor may be 300 rpm to 600 rpm. The stirring speed of the reactor may be, for example, greater than or equal to 300 rpm, greater than or equal to 350 rpm, greater than or equal to 400 rpm, greater than or equal to 450 rpm, greater than or equal to 500 rpm, greater than or equal to 550 rpm, or greater than or equal to 600 rpm and less than or equal to 600 rpm, less than or equal to 550 rpm, less than or equal to 500 rpm, less than or equal to 450 rpm, less than or equal to 400 rpm, or less than or equal to 350 rpm.

An aqueous manganese salt solution, a precipitant, and a complexing agent are added to the dispersion in an atmosphere of reduced oxygen content by injecting an inert gas, to prepare a nickel-based composite metal hydroxide coated with a manganese salt by a co-precipitation method.

At this time, the manganese salt may be coated in a grain boundary in the form of manganese hydroxide on the primary particles present in the surface portion of the secondary particles of the nickel-based composite metal hydroxide. The manganese salt may be selected from manganese sulfate ($MnSO_4$), manganese nitrate, manganese acetate, hydrates thereof, and a combination thereof.

The precipitant may be NaOH. When the precipitant is NaOH, NaOH may serve as a pH adjusting agent in the reactor.

The complexing agent may be $NH_3OH$. The precursor may be solidified through the precipitant and the complexing agent to form a circular precursor.

The pH of the reactor may be maintained at 8 to 13. The pH of the reactor is greater than or equal to 8, greater than or equal to 8.5, greater than or equal to 9, greater than or equal to 9.5, greater than or equal to 10, greater than or equal to 10.5, greater than or equal to 11, greater than or equal to 11.5, greater than or equal to 12, greater than or equal to 12.5, greater than or equal to 13, and greater than or equal to 13, and less than or equal to 12.5, less than or equal to 12, less than or equal to 11.5, less than or equal to 11, less than or equal to 10.5, less than or equal to 10, less than or equal to 9.5, less than or equal to 9, or less than or equal to 8.5.

The temperature of the reactor may be maintained at 20 °C to 50 °C. The temperature of the reactor may be greater than or equal to 20 °C, greater than or equal to 30 °C, and greater than or equal to 40 °C, or greater than or equal to 50 °C and less than or equal to 40 °C, and less than or equal to 30 °C.

The nickel-based composite metal hydroxide coated with the manganese salt in the reactor may be dried in a vacuum dryer at a temperature of 100 °C to 200 °C. The drying may be drying using convection. When drying using convection, oxygen may flow in and manganese hydroxide may react with oxygen to become an oxide. The manganese hydroxide may react with oxygen to form manganese oxides such as $MnO_2$, $Mn_2O_3$, and $Mn_3O_4$.

After the drying, the dried nickel-based composite metal hydroxide may be heat-treated at a temperature of 400 °C to 600 °C. All of the remaining manganese hydroxide through the heat treatment may be converted into manganese oxide (e.g., $MnO_2$).

The present invention is explained in more detail in the following examples and comparative examples. It is to be understood, however, that the examples are for the purpose of illustration and are not to be construed as limiting the present invention.

**Examples**

(Manufacture of Positive Electrode Active Material Precursor)

In a reactor into which $Ni_{0.98}Co_{0.02}(OH)_2$ and distilled water were added, after supplying $N_2$ gas at 4000 sccm, an aqueous solution in the reactor was stirred at 300 rpm to 600 rpm, while maintained at 45 °C. Subsequently, a 2 M manganese sulfate aqueous solution, a 5.5 M NaOH aqueous solution, and $NH_3OH$ were continuously added to the reactor for 30 minutes to 1 hour. While maintaining the pH concentration in the reactor between 10 and 12, the resultant was dried in a vacuum dryer at a temperature of 120 °C to prepare a nickel-based composite metal hydroxide coated with manganese salt. At this time, manganese was included in an amount of 1 mol% based on 100 mol% of the total amount of Ni, Co, and Mn.

(Preparation of Positive Electrode Active Material)

The nickel-based composite metal hydroxide coated with the manganese salt and lithium hydroxide were mixed in a molar ratio of 1:1, and then fired at 720 °C for 5 hours to obtain a positive electrode active material powder.

(Manufacture of Positive Electrode)

94 wt% of the positive electrode active material, 3 wt% of ketjen black, and 3 wt% of polyvinylidene fluoride were mixed in an N-methyl pyrrolidone solvent, preparing positive electrode active material slurry. The positive electrode active material slurry was coated on an Al foil and then, dried and compressed, manufacturing a positive electrode.

(Manufacture of Coin Cell)

The manufactured positive electrode, a lithium metal as a counter electrode, a PTFE separator, and a solution in which 1.15 M $LiPF_6$ was dissolved in a mixed solvent of EC (ethylene carbonate), DEC (diethyl carbonate), and EMC (ethylmethyl carbonate) (in a volume ratio of 3:4:3) as an electrolyte were used to manufacture a coin cell.

**Comparative Example 1**

(Manufacture of Positive Electrode Active Material Precursor)

A positive electrode active material precursor was prepared in the same manner as in Example 1, except that the manganese sulfate aqueous solution was not added, and a coin cell was manufactured using the same.

**Comparative Example 2**

(Manufacture of Positive Electrode Active Material Precursor)

In a reactor including $Ni_{0.98}Co_{0.02}(OH)_2$ and distilled water,

Mn(CH$_3$COO)·2H$_2$O was added and stirred, then dried in a vacuum dryer at 120 °C and heat-treated at 450 °C for 3 hours to obtain MnO$_2$-coated Ni$_{0.98}$Co$_{0.02}$O$_2$ nickel-based composite metal oxide. At this time, manganese was included in an amount of 1 mol% based on 100 mol% of the total amount of Ni, Co, and Mn.

**Evaluation 1. Measurement of Primary Particle Coating**

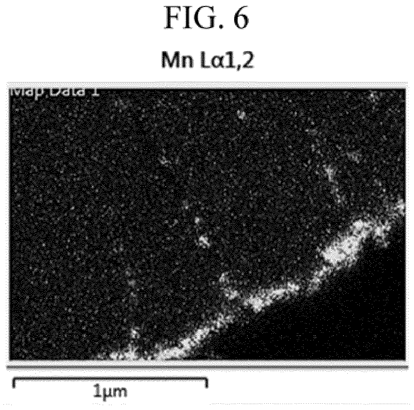

Using a Scanning Electron Microscope-Energy Dispersive X-ray Spectrometer (SEM-EDS), it was measured whether the primary particles in the surface portion of the secondary particles of the positive electrode active material precursor of the example were coated with manganese salt or not. The measurement results are shown in FIGS. 5 and 6. FIG. 5 shows a SEM photograph of the surface of the secondary particle of the positive electrode active material precursor of the example and FIG. 6 shows the distribution of manganese in the positive electrode active material precursor of the example. The darker the yellow color, the greater the distribution amount of manganese.

As shown seen in FIGS. 5 and 6, manganese is distributed not only on the surface of secondary particles but also between primary particles in the surface portion of secondary particles. In particular, almost no manganese is distributed inside the primary particles, and most of the manganese is distributed between the primary particles. These results indicate that the manganese salt is coated between the primary particles in the surface portion of the secondary particles of the positive electrode active material precursor, that is, is coated in the grain boundary.

**Evaluation 2.** Evaluation of Initial Charge and Discharge Capacity and Charge and Discharge Efficiency

. The coin cells according to the example and comparative examples were once charged, respectively, and discharged at 0.1 C and 0.2 C and then, measured with respect to charge capacity, discharge capacity, and charge and discharge efficiency. This is shown in Table 1.

(Table 1)

|  | Comparative Example1 | Comparative Example2 | Example 1 |
|---|---|---|---|
|  | Bare_LiNi$_{0.98}$Co$_{0.02}$O$_2$ | LiNi$_{0.9702}$Co$_{0.0198}$Mn$_{0.01}$O$_2$ | LiN$_{0.9702}$C0$_{0.0198}$Mn$_{0.01}$ O$_2$ |
| 0.1C charge mAh/g | 254.69 | 247.82 | 250.65 |
| 0.1C discharge mAh/g | 233.04 | 228.49 | 235.71 |
| efficiency | 91.50% | 92.2% | 94.04% |
| 0.2C charge mAh/g | 245.7 | 244.55 | 248.74 |
| 0.2C discharge mAh/g | 215.21 | 217.11 | 227.07 |
| Efficiency | 87.59% | 88.78% | 91.29% |

As shown in Table 1, it can be seen that the charge/discharge efficiency of the coin cell manufactured in Example 1 is superior to that of Comparative Examples 1 and 2.

**Evaluation 3.** Evaluation of Cycle Life Characteristics

The coin cells according to the example and comparative examples were constant current-charged at a current rate of 1.0 C to a voltage of 4.30 V (vs. Li) and subsequently, cut off at a current rate of 0.05 C in the constant voltage mode, while the 4.30 V was maintained, at 45 °C. Subsequently, the coin cells were discharged under a constant current to a voltage of 3.0 V (vs. Li) at a current rate of 1.0 C, which was regarded as one cycle and repeated up to 50$^{th}$ cycles. In all the charge and discharge cycles, a pause of 10 minutes was set after every charge/discharge cycle. The coin cells were measured with respect to a cycle-life (capacity retention) at the 50$^{th}$ cycle, and the results are shown in Table 2.

The capacity retention was calculated according to Equation 1:

[Equation 1]

Capacity retention rate at 50$^{th}$ cycle [%] = [Discharge capacity at 50$^{th}$ cycle

/ Discharge capacity at 1$^{st}$ cycle] × 100[%]

(Table 2)

|  | Example 1 | Comparative Example 1 | Comparative Example 2 |
|---|---|---|---|
| Cycle-life at 50th cycle | 92.7% | 83.4% | 88.7% |

As shown in Table 5, it can be seen that the cycle-life of the coin cell manufactured in Example 1 is better than Comparative Examples 1 and 2.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

**<Description of symbols>**

1: secondary particle
3: primary particle
5a: central portion
5b: surface portion
7: grain boundary

**Claims**

1. A positive electrode active material precursor for a rechargeable lithium battery, comprising

   a nickel-based composite metal hydroxide including a secondary particle in which a plurality of primary particles are agglomerated,
   wherein the secondary particle includes a central portion and a surface portion, and
   the surface portion includes a primary particle coated with manganese oxide, manganese hydroxide, or a mixture thereof.

2. The positive electrode active material precursor for the rechargeable lithium battery of claim 1, wherein the manganese hydroxide is $Mn(OH)_2$

3. The positive electrode active material precursor for the rechargeable lithium battery of claim 1, wherein the manganese oxide is at least one selected from $MnO_2$, $Mn_2O_3$ and $Mn_3O_4$.

4. The positive electrode active material precursor for the rechargeable lithium battery of claim 1, wherein a content of manganese is 0.1 mol% to 5 mol%, based on the total amount (mol%) of the positive electrode active material precursor.

5. The positive electrode active material precursor for the rechargeable lithium battery of claim 1, wherein the positive electrode active material precursor has a concentration gradient in which the concentration of manganese gradually decreases from the outermost surface toward the center of the surface portion of the secondary particle.

6. The positive electrode active material precursor for the rechargeable lithium battery of claim 1, wherein the surface portion of the secondary particle is within 50 length% of the total distance from the center to the outermost surface of the secondary particle in the direction from the outermost surface to the center.

7. The positive electrode active material precursor for the rechargeable lithium battery of claim 1, wherein the nickel-based composite metal hydroxide is represented by Chemical Formula 1:

   [Chemical Formula 1]          $Ni_{1-x-y-z}Co_xMn_yM_z(OH)_2$

wherein, in Chemical Formula 1,
$0<x\leq0.05$, $0.001\leq y\leq0.05$, and $0\leq z\leq0.02$, and M is at least one metal element selected from Ni, Mn, Al, Cr, Fe, V, Mg, Ti, Zr, Nb, Mo, W, Cu, Zn, Ga, In, Sn, La, B, Ta, Pr, Si, Ba, and Ce.

8. The positive electrode active material precursor for the rechargeable lithium battery of claim 1, wherein the positive electrode active material precursor has a shape selected from nanoparticles, nanofibers, and a combination thereof.

9. The positive electrode active material precursor for the rechargeable lithium battery of claim 1, wherein the positive electrode active material precursor is a layered structure.

10. A method of preparing a positive electrode active material precursor for a rechargeable lithium battery, comprising

preparing a dispersion in which a nickel-based composite metal hydroxide including secondary particles in which a plurality of primary particles are agglomerated is dispersed in a solvent (wherein the secondary particles have a central portion and a surface portion),
adding an aqueous solution of manganese salt and a precipitant to the dispersion in an atmosphere having a reduced oxygen content to prepare a nickel-based composite metal hydroxide coated with a manganese salt (wherein the manganese salt is coated on the primary particles of the surface portion), and
drying the nickel-based composite metal hydroxide coated with the manganese salt.

11. The method of preparing the positive electrode active material precursor for the rechargeable lithium battery of claim 10, wherein the atmosphere having the reduced oxygen content is obtained by injecting an inert gas.

12. The method of preparing the positive electrode active material precursor for the rechargeable lithium battery of claim 10, wherein a process of heat-treating the dried product produced after drying the nickel-based composite metal hydroxide coated with the manganese salt at 400 to 500 °C is further included.

13. The method of preparing the positive electrode active material precursor for the rechargeable lithium battery of claim 10, wherein all manganese compounds are changed to $MnO_2$ through the heat treatment.

FIG. 1

# FIG. 2

# FIG. 3

# FIG. 4

SDI 5.0kV 8.0mm x100k SE(M)          500nm

# FIG. 5

primary particle

surface portion of the secondary particle

# FIG. 6

## Mn Lα1,2

1μm

## INTERNATIONAL SEARCH REPORT

| | International application No. |
|---|---|
| | **PCT/KR2021/008865** |

**A. CLASSIFICATION OF SUBJECT MATTER**

**H01M 4/525**(2010.01)i; **H01M 4/505**(2010.01)i; **C01G 53/00**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 4/525(2010.01); C01G 53/00(2006.01); H01M 10/052(2010.01); H01M 4/36(2006.01); H01M 4/48(2010.01); H01M 4/485(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode active material), 전구체(precursor), 니켈(nickel), 망간 (manganese), 산화물(oxide), 수산화물(hydroxide), 농도(concentration), 코팅(coating), 열처리(heating)

**C. DOCUMENTS CONSIDERED TO BE RELEVANT**

| Category* | Citation of document, with indication, where appropriate, of the relevant passages | Relevant to claim No. |
|---|---|---|
| X | JP 2018-070419 A (SUMITOMO METAL MINING CO., LTD.) 10 May 2018 (2018-05-10)<br>See paragraphs [0027], [0030]-[0035], [0037], [0049]-[0069], [0076], [0109] and [0110] and figure 1. | 1-11 |
| Y | | 12,13 |
| Y | KR 10-2017-0076723 A (SUMITOMO METAL MINING CO., LTD.) 04 July 2017 (2017-07-04)<br>See paragraphs [0016], [0028] and [0111]. | 12,13 |
| A | KR 10-2019-0065963 A (SAMSUNG SDI CO., LTD.) 12 June 2019 (2019-06-12)<br>See claims 1-14. | 1-13 |
| A | KR 10-1316053 B1 (UNIST ACADEMY-INDUSTRY RESEARCH CORPORATION) 11 October 2013 (2013-10-11)<br>See claims 11-15 and figures 1 and 2. | 1-13 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 October 2021** | **26 October 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/008865**

### C.    DOCUMENTS CONSIDERED TO BE RELEVANT

| Category* | Citation of document, with indication, where appropriate, of the relevant passages | Relevant to claim No. |
|---|---|---|
| A | US 2014-0087261 A1 (TSINGHUA UNIVERSITY et al.) 27 March 2014 (2014-03-27)<br>See paragraphs [0028]-[0056] and figures 1-3. | 1-13 |

Form PCT/ISA/210 (second sheet) (July 2019)

**INTERNATIONAL SEARCH REPORT**
Information on patent family members

International application No.

**PCT/KR2021/008865**

| Patent document cited in search report | | | Publication date (day/month/year) | Patent family member(s) | | | Publication date (day/month/year) |
|---|---|---|---|---|---|---|---|
| JP | 2018-070419 | A | 10 May 2018 | CN | 110121481 | A | 13 August 2019 |
| | | | | EP | 3533764 | A1 | 04 September 2019 |
| | | | | JP | 6855752 | B2 | 07 April 2021 |
| | | | | KR | 10-2019-0078603 | A | 04 July 2019 |
| | | | | US | 2020-0052295 | A1 | 13 February 2020 |
| | | | | WO | 2018-079809 | A1 | 03 May 2018 |
| KR | 10-2017-0076723 | A | 04 July 2017 | CN | 107108264 | A | 29 August 2017 |
| | | | | JP | 6658534 | B2 | 04 March 2020 |
| | | | | US | 10593942 | B2 | 17 March 2020 |
| | | | | US | 2017-0324090 | A1 | 09 November 2017 |
| | | | | US | 2020-0161653 | A1 | 21 May 2020 |
| | | | | WO | 2016-068263 | A1 | 06 May 2016 |
| KR | 10-2019-0065963 | A | 12 June 2019 | CN | 111587500 | A | 25 August 2020 |
| | | | | EP | 3723172 | A2 | 14 October 2020 |
| | | | | US | 10847781 | B2 | 24 November 2020 |
| | | | | US | 2019-0173076 | A1 | 06 June 2019 |
| | | | | US | 2021-0043920 | A1 | 11 February 2021 |
| | | | | US | 2021-0074998 | A1 | 11 March 2021 |
| | | | | US | 2021-0083287 | A1 | 18 March 2021 |
| | | | | WO | 2019-112279 | A2 | 13 June 2019 |
| KR | 10-1316053 | B1 | 11 October 2013 | CN | 103620833 | A | 05 March 2014 |
| | | | | EP | 2704236 | A2 | 05 March 2014 |
| | | | | JP | 2014-515171 | A | 26 June 2014 |
| | | | | KR | 10-2012-0121235 | A | 05 November 2012 |
| | | | | US | 2014-0045067 | A1 | 13 February 2014 |
| | | | | WO | 2012-148157 | A2 | 01 November 2012 |
| US | 2014-0087261 | A1 | 27 March 2014 | CN | 103700833 | A | 02 April 2014 |
| | | | | TW | 201414064 | A | 01 April 2014 |
| | | | | TW | I469431 | B | 11 January 2015 |
| | | | | US | 8802291 | B2 | 12 August 2014 |

Form PCT/ISA/210 (patent family annex) (July 2019)